# EUROPEAN PATENT APPLICATION

(11) **EP 4 793 297 A1**
(43) Date of publication of application: **19.08.2026**
(21) Application number: 25157660.9
(22) Date of filing: 13.02.2025
(51) Int. Cl.: C08F 8/28

(54) **POLYVINYL ACETALS WITH IMPROVED UNDISSOLVED PARTICLE CONTENT**

(71) Applicant: Kuraray Europe GmbH, 65795 Hattersheim am Main (DE)
(72) Inventor: Mummy, Florian, 60325 Frankfurt am Main (DE); Frank, Michael, 55268 Nieder-Olm (DE); Schirra, Dominic, Hofheim am Taunus (DE)
(74) Representative: Janßen, Christian Oliver

(57) **Abstract**

The invention is directed to the polyvinyl acetals with an improved undissolved particle count, methods for the production of such polyvinyl acetals and their use as binder for the production of ceramic green sheets.

## Description

Ceramic materials like ceramic capacitators for the electronics industry are generally produced by sintering of a so-called green sheet, i.e. a film-like, thin moulded body, which contains the ceramic materials. For the production of these green sheets, a suspension of metal oxides, plasticizers, dispersing agents and binders in organic solvents is produced. This suspension is subsequently applied by means of a suitable process (i.e. doctor blade process) in the desired thickness onto a carrier film and the solvent is removed. The green sheet thus obtained must be free from cracks, exhibit a smooth surface and still have a certain elasticity. Polyvinyl acetals such as polyvinyl butyral (PVB) are frequently used as binders in this process.

In recent years, multi-layer ceramic capacitors (MLCC) are becoming increasingly important for the electronic industry. MLCCs consist of a number of individual capacitors stacked together in parallel and contacted via the terminal surfaces. Due to the advancing miniaturization of the electronic components, undissolved particles, i.e. particles that do not dissolve or do not dissolved in a given time in the solvent (mixture) used to make the suspension required to produce the green sheets, are of major concern and can lead to defects in the ceramic layers after sintering of the green sheets.

The present invention pertains to the innovative utilization of polyvinyl butyral (PVB) in a form that significantly reduces the presence of undissolved particles, which have a low aspect ratio (as expressed by the diameter divided by the length). Such particles are commonly referred to as "angel hair" as they are rather thin and long and thus, show a hair-like appearance. The present inventors have further analysed the angle hair particles and found that they comprise the polyvinyl acetal itself as main component. Thus, it is believed that these particles do not stem from external contamination but are formed in the preparation of the polyvinyl acetal.

Without wanting to be bound to a theory, it is believed that the angel hair particles are formed from the polyvinyl acetals at the end of the production process. After drying, the polyvinyl acetal resin is generally transported to its storage location by means of pneumatic conveying. The polyvinyl acetal resin leaves the dryer with a high residual temperature which is usually above its glass transition temperature (Tg). Thus, the stress during pneumatic conveying can lead to a smearing or spreading of the polyvinyl acetal material forming particles with rather high length and low aspect ratios. It has now been found that the formation of such angel hair particles can be avoided or at least substantially reduced by cooling the polyvinyl acetal after the drying process and before transporting it to the final storage location.

Thus, one objective of the invention was to provide polyvinyl acetals used as binders for ceramic green sheets with improved properties regarding undissolved particles as well as processes for the production of such polyvinyl acetals. A further objective was to provide such binders leading to improved rate of dissolution, adhesion, improved handling, improved elongation-at-break, improved tensile strength, improved dispersion effect, an improved environmental, health and safety impact and/or with a better economical profile in the production and use of the ceramic green sheet.

Accordingly, a first aspect of the present invention concerns a process for the production of a polyvinyl acetal powder comprising the steps of
a. reacting a polyvinyl alcohol with an aldehyde in the presence of an acid to prepare the polyvinyl acetal,
b. precipitating the polyvinyl acetal obtained in step a.,
c. washing the precipitate obtained in step b. with a washing liquid comprising water,
d. drying the washed precipitate of step c, and
e. transporting the polyvinyl acetal powder of step d to a storage location,
wherein the polyvinyl acetal powder is actively cooled during the transporting step e.

Preferably, the aldehyde has 1 to 7 carbon atoms. More preferably, the aldehyde is chosen from the list consisting of methanal (formaldehyde), acetaldehyde, n-propanal (propionaldehyde), n-butanal (butyraldehyde), iso-butanal (2-methyl-1-propanal, iso-butyraldehyde), n-pentanal (valeraldeyhde), iso-pentanal (3-methyl-1-butanal), sec-pentanal (2-methyl-1-butanal), tert-pentanal (2,2,dimethyl-1-propanal), n-hexanal (capronaldehyde), iso-hexanal (2-methyl-1-pentanal, 3-methyl-1-pentanal, 4-methyl-1-pentanal), 2,2-dimethyl-1-butanal, 2,3-dimethyl-1-butanal, 3,3-dimethyl-1-butanal, 2-ethyl-1-butanal, n-heptanal, 2-methyl-1-hexanal, 3-methyl-1-hexanal, 4-methyl-1-hexanal, 5-methyl-1-hexanal, 2,2-dimethyl-1-pentanal, 3,3-dimethyl-1-pentanal, 4,4-dimethyl-1-pentanal, 2,3-dimethyl-1-pentanal, 2,4-dimethyl-1-pentanal, 3,4-dimethyl-1-pentanal, 2-ethyl-1-pentanal, 2-ethyl-2-methyl-1-butanal, 2-ethyl-3-methyl-1-butanal, 3-ethyl-2-methyl-1-butanal, cyclohexylaldehyde and benzaldehyde. More preferably, the aldehyde is iso-butyraldehyde, acetaldehyde and/or n-butyraldehyde. Most preferably, the polyvinyl acetal is polyvinyl butyral or a mixed polyvinyl acetal derived from a condensation with n-butyraldehyde and acetaldehyde.

The acids which can be used in step a. are those which are known for the manufacturing processes of polyvinyl acetals, for example, hydrochloric acid, sulfuric acid, nitric acid or mixtures of these acids. Preferably, the acid is hydrochloric acid.

The precipitation step in step b. can be performed by adding a solvent to the reaction mixture. However, preferably the precipitation is done without any further addition of a solvent or any other manipulation but precipitation occurs because the polyvinyl acetal formed in step a. is insoluble or nearly insoluble in the reaction mixture.

The washing liquid in step c. can be a mixture of water and a water-miscible solvent, e.g. an alcohol like methanol, ethanol or isopropanol. Preferably, the washing liquid essentially consists of water.

The drying step is performed by means conventionally known in the art. Preferably, it is performed with hot air with an air temperature of 60 to 140 °C, more preferably 80 to 120 °C. The drying step can preferably be performed by adjusting the air temperature to the residual moisture in the polyvinyl acetal, i.e. by continuously lowering the temperature depending on the decreasing residual moisture content during the drying process.

The transportation in step e. is preferably affected by pneumatic conveying, i.e. in a process in which a positive displacement blower or compressor is used to create a high-pressure air or gas flow. This flow is then directed through a pipeline or duct system, which carries the polyvinyl acetal along with it.

The pipeline is preferably made from stainless steel or plastic. More preferably, the pipeline is made from flexible plastic piping in order to reduce the wall adhesion of the polyvinyl acetal resin powder. In case the pipeline is made from stainless steel, the anti-static measures are preferably provided in the pipeline in order to prevent or reduce the charging of the polyvinyl acetal particles, e.g. by implementation of anti-static bars in the product flow.

The active cooling in step e. has been found to be crucial for the reduction of the angel hair particles formed from the polyvinyl acetals. The polyvinyl acetal resin leaves the dryer with a rather high residual temperature which is usually above its glass transition temperature (Tg). Thus, the stress during pneumatic conveying can lead to a smearing or spreading of the polyvinyl acetals, which can be substantially reduced by actively cooling the polyvinyl acetal powder during transportation.

"Active cooling" is to be understood as involving an active process step that is aimed at reducing the temperature of the polyvinyl acetal and needs to be distinguished from simply letting the powder cool down.

The active cooling can be affected by cooling the pipeline through which the polyvinyl acetal is transported. However preferably, the polyvinyl acetal powder is cooled by counterflow cooling with a cooling gas. The cooling gas can be an inert gas like nitrogen. In terms of cost however, the cooling gas is more preferably air.

Also preferably, the cooling gas has a temperature from 10 to 30 °C.

Also preferably, the molecular weight is equal to or more than 40,000 g/mol, more preferably 50,000 g/mol. Also preferably, the molecular weight is equal to or less than 200,000 g/mol, more preferably equal to or less than 175,000 g/mol, most preferably equal to or less than 150,000 g/mol and specifically equal to or less than 100,000 g/mol. The molecular weight is determined by gel permeation chromatography according to DIN ISO 16014 1:2019-05.

Preferably, the degree of acetalization of the polyvinyl acetals used in the present invention is 50 mol% or more and less than 90 mol%, more preferably the lower limit of the degree of acetalization is more than 60 mol%, even more preferably more than 70 mol% and most preferably more than 80 mol%. Further, the upper limit of the degree of acetalization is more preferably 90 mol% or less, and most preferably 85 mol% or less.

Preferably, the percentage of vinyl alcohol units in the polyvinyl acetals of the present invention is 10 to 25 mol%, more preferably 15 to 20 mol%, most preferably 17 to 19% based on the total monomer unit constituting the resin.

The vinyl alcohol content and vinyl acetate content of polyvinyl acetal were determined in accordance with DIN ISO 3681 (Acetate content) and DIN ISO 53240 (PVA content).

In another aspect, the present invention concerns a polyvinyl acetal resin comprising less than 100 ppm of particles with an aspect ratio calculated as xVBFD / xL of less than 0.3 and a particle length of more than 700 µm. More preferably, it comprises less than 90, less than 80 less than, less than 75, less than 70, less than 60 and most preferably less than 50 ppm of particles with an aspect ratio calculated as xVBFD / xL of less than 0.3 and a particle length of more than 700 µm.

In a more preferably embodiment, it comprises less than 25 ppm of particles with an aspect ratio calculated as xVBFD / xL of less than 0.3 and a particle length of more than 700 µm.

In yet another aspect, the present invention concerns a suspension composition comprising one or more inorganic pigments, one or more organic solvents, one or more binders, one or more plasticizers, and one or more dispersing agents, wherein the binder is the polyvinyl acetal as described above.

The inorganic pigments can be chosen from finely ground granules of paraelectric or ferroelectric raw materials and include titanium dioxide (rutile), preferably modified by additives of zinc, zirconium, niobium, magnesium, tantalum, cobalt and/or strontium, as well as compounds chosen from MgNb₂O₆, ZnNb₂O₆, MgTa₂O₆, ZnTa₂O₆, (ZnMg)TiO₃, (ZrSn)TiO₄, BaTiO₃, and Ba₂Ti₉O₂₀. The average particle diameter of the inorganic pigments is preferably about 0.01 to 1 µm.

The organic solvent may be chosen from aromatic compounds, such as toluene and xylene, and alcohol compounds, such as methanol, ethyl alcohol, isopropyl alcohol and butyl alcohol and more preferably, mixtures thereof. Most preferably, the organic solvent is a mixture of ethanol and toluene.

Suitable dispersing agents include fish oil, phosphoric acid esters and functional polymers comprising polyoxyalkylene groups on side chain, such as the MALIALIM^{™} series commercially available from NOF America Cooperation.

In addition to the binder according to the present invention, the suspension may comprise other components chosen inter alia from other binders like cellulose resins, acrylic resins, vinyl acetate resins, polyvinyl alcohol resins; plasticizers such as polyethylene glycol or phthalic esters, and/or a defoamer.

The method to produce the suspension composition is not specifically limited. Various dispersing methods may be used, for example, a method of using a media-type mill, such as a bead mill, a ball mill, an attritor, a paint shaker and a sand mill; a method of kneading a powdered ceramic, a dispersing medium, a dispersing agent, a binder, a plasticizer and the like; and a method of using a three-roll mill. Using a three-roll mill, the method includes dispersing a powdered inorganic pigment in an organic solvent (mixture) together with a dispersing agent, a binder, a plasticizer, and the like. The mixture is passed through a small gap between a first roller and a second roller, which roll independently from each other and are adjacent to each other with the small gap therebetween, so as to be compressed and kneaded, and subsequently, the mixture is passed between the second roller and a third roller, which rolls and is adjacent to the second roller with a smaller gap therebetween than the gap between the first and the second rollers, so as to be further compressed and kneaded.

Preferably, the powdered ceramic, dispersing agent, and solvent (mixture) are premixed and dispersed so that the dispersing agent is adsorbed on the powdered ceramic. In a second step, the binder is added to the mixture thus formed, and subsequently, mixing and dispersing is performed again.

In yet another aspect, the present invention concerns the use of the polyvinyl acetal powder obtained in the inventive process as a binder for the production of a ceramic green sheet or a ceramic moulded body.

### Examples

### Synthesis of the polyvinyl acetals

### Polyvinyl butyral (PVB 1)

100 parts by weight of polyvinyl alcohol with a viscosity of 26 mPas (4 w/w% in aqueous solution measured according to DIN 53015 at 20 °C) and a degree of hydrolysis of 99 mol% was dissolved in 1075 parts by weight of water with heating to 90 °C. At a temperature of 40 °C, 57 parts by weight of n-butyraldehyde were added, and at a temperature of 10 °C - while stirring - 75 parts by weight of 20% hydrochloric acid was added. The mixture was heated to 70 °C. After the polyvinyl butyral (PVB) had precipitated and stirred at this temperature for 1 hour. The PVB was separated after cooling to room temperature, washed to neutrality with water, and dried. A PVB having a polyvinyl alcohol content of 20.0 % by weight (28.8 mol %) and a polyvinyl acetate content of 1.4% by weight (1 mol %) was obtained.

A part of the resulting resin was dried conventionally in a dryer operating with hot air at a temperature of 120 °C and transported to conventional big bags by means of pneumatic conveying though stainless steel pipes.

Another part of the resulting resin was dried according to the invention by transporting it to conventional big bags by means of pneumatic conveying though stainless steel pipes under cooling with a counterflow of air with an air temperature of 15 °C.

### Measurement of the particle size

2.4 g PVB powder is poured into the funnel of the dynamic image analyzer "QICPIC" (manufacturer: sympatec GmbH, Germany). The device consists of a precise dosing unit for dry particles (VIBRI), a dispersing unit for dry powder with the help of compressed air (RODOS) and the high speed camera and optical unit (QICPIC/L). The feed rate was set to 60%, the gap width between funnel and V-shaped chute was 1 mm. The pressure was set to 0.5 bar. The optical unit was of the type "M8" with an object field of 22 x 22 mm. A typical optical concentration was 0.2%. One measurement took about 40 seconds and was repeated twice for each sample and the results were summed up.

### Volume model: Fibre_Cylinder

### Filter mode: diameter:LEFI > 700 µm and aspect ratio < 0.3

### Calculation of the length of the particle xL / LEFI

The length of the particles used herein is the LEFI value. The length of a particle was defined as the direct connection between its opposite ends, i.e. the longest direct path from one end to another within the particle contour. Direct means without loops or deviations. The technique used to calculate this value was to reduce the dimensions of the particle from all directions until one or more lines of one pixel width remained. The length of the particle xL was the result of this LEFI calculation.

### Calculation of the volume based particle diameter xVBFD

The VBFD diameter used here is defined as the diameter of a cylinder that has the same volume as the respective particle. It was calculated with xD, the particle diameter measured by the DIFI, and the particle length xL. DIFI was calculated with software PAQXOS (sympatec GmbH) by dividing the projection area by the sum of all lengths of the branches of the particle. Only particles that are completely within the image frame were included. xVBFD was calculate using the following equation: ${X}_{VBFD} = \sqrt[3]{\frac{3}{2} {{X}_{D}}^{2} ⋅ {X}_{L}}$

### Calculation of the aspect ratio

The aspect ratio was calculated as xVBFD divided by xL.

| Results | Total number of total particles analyzed | Number of angel hairs detected | Angel hair per 1 million total particles |
|---|---|---|---|
| Conventional drying | 2.05 million | 219 | 107 |
| Drying according to the invention | 2.03 million | 92 | 45 |

## Claims

1. A process for the production of a polyvinyl acetal powder comprising the steps of
a. reacting a polyvinyl alcohol with an aldehyde in the presence of an acid to prepare the polyvinyl acetal,
b. precipitating the polyvinyl acetal obtained in step a.,
c. washing the precipitate obtained in step b. with a washing liquid comprising water,
d. drying the washed precipitate of step c, and
e. transporting the polyvinyl acetal powder of step d to a storage location, wherein the polyvinyl acetal powder is actively cooled during the transporting step e.

2. The process according to claim 1 wherein the polyvinyl acetal powder is cooled by counterflow cooling with a cooling gas.

3. The process according to claim 1 or 2 wherein the cooling gas is air.

4. The process according to claim 2 or 3 wherein the cooling gas has a temperature from 10 to 30 °C.

5. The process according to any one of the claims above wherein the transporting in step e is affected by pneumatic conveying.

6. The process according to any one of the claims above wherein the drying in step d is performed at an air temperature from 60 to 140 °C.

7. The process according to any one of the claims above wherein the polyvinyl acetal is polyvinyl butyral.

8. A polyvinyl acetal resin comprising less than 100 ppm of particles with an aspect ratio calculated as xVBFD / xL of less than 0.3 and a particle length of more than 700 µm.

9. The polyvinyl acetal resin according to claim 8 comprising less than 75 ppm of particles with an aspect ratio calculated as xVBFD / xL of less than 0.3 and a particle length of more than 700 µm.

10. The polyvinyl acetal resin according to claim 9 comprising less than 50 ppm of particles with an aspect ratio calculated as xVBFD / xL of less than 0.3 and a particle length of more than 700 µm.

11. The polyvinyl acetal resin according to claim 8 comprising less than 25 ppm of particles with an aspect ratio calculated as xVBFD / xL of less than 0.3 and a particle length of more than 700 µm.

12. The polyvinyl acetal according to any one of the claims 8 to 11 wherein the polyvinyl acetal is polyvinyl butyral.

13. Use of the polyvinyl acetal according to any one of the claims 8 to 12 of the polyvinyl acetal obtained in the process according to any one of the claims 1 to 7 as a binder for the production of a ceramic green sheet or a ceramic moulded body.

14. A suspension composition comprising the polyvinyl acetal according to any one of claims 8 to 12, one or more inorganic pigments, one or more organic solvents, one or more binders, one or more plasticizers, and one or more dispersing agents.
